# EUROPEAN PATENT APPLICATION

(11) **EP 3 800 687 A1**
(43) Date of publication of application: **07.04.2021**
(21) Application number: 19926733.7
(22) Date of filing: 05.09.2019
(51) Int. Cl.: H01M 2/02

(54) **BATTERY MODULE**

(30) Priority: 08.08.2019 CN 201910731734; 08.08.2019 CN 201921281107 U
(71) Applicant: Sunwoda Electric Vehicle Battery Co., Ltd., Shenzhen, Guangdong 518000 (CN)
(72) Inventor: CHENG, Zhigang, Shenzhen, Guangdong 518000 (CN)
(74) Representative: Ostriga Sonnet Wirths & Vorwerk
(86) International application number: PCT/CN2019/104511
(87) International publication number: WO 2021/022606

(57) **Abstract**

The invention discloses a battery module, which comprises a cell, a cell separator, an end plate, a side plate, an electrical separator, a connecting sheet, a wire harness and an upper cover, wherein the cell separator is arranged between adjacent cells, the cell and the cell separator are fixed into a small component through UV glue, a plurality of the small components are stacked, the end plates are arranged at two ends of the small component in a stacking direction, the side plates are arranged on two sides of the small component in the stacking direction, the end plates are welded with the side plates, and the cells are connected in series or in parallel through the connecting sheet to form the battery module. The invention solves a problem of a large thickness tolerance of the cell and the cell separator by controlling a thickness of the UV glue and ensures an accuracy requirement for a length of the module after grouping, and the cell separator is made of a material capable of transmitting ultraviolet light, so that the UV glue can be rapidly cured by irradiation of an ultraviolet lamp, thereby improving the production efficiency.

## Description

### TECHNICAL FIELD

The present invention relates to the field of energy storage technologies, and more particularly, to a battery module.

### BACKGROUND

Battery modules are the "heart" of electric vehicles. The battery modules are the core portion for providing the power source for the new energy transportation vehicles, such as pure electrics vehicle and hybrid vehicle. The battery modules play main roles of protecting the cell and outputting the power source, and the structure design of the battery module is a key link to ensure the safety of the cell.

A loop-shaped rubber ring is generally arranged between the cells in the prior art, and a length of the module is controlled by using a compressibility of the loop-shaped rubber ring through applying a clamping force to end plates at two ends. There are two main problems in this assembly manner. 1. A compression amount of each loop-shaped rubber ring in the module is uncontrollable, which is restricted by a current level of an existing cell manufacturing industry, the cell has a large thickness tolerance on different positions during manufacturing, and the tolerance is absorbed by using the compressibility of the loop-shaped rubber ring, but a pressure and a compression amount of the loop-shaped rubber ring during grouping of the module are uncontrollable, resulting in a poor length accuracy of the module after grouping. 2. A performance of the loop-shaped rubber ring is greatly changed at high and low temperatures, and the loop-shaped rubber ring may be softened at a high temperature, which is likely to cause contact between the cells, resulting in an adverse consequence.

### SUMMARY

### Technical problem

Aiming at the defects in the prior art, the present invention provides a battery module, which addresses the problem of large thickness tolerances of cells and cell separators.

### Technical scheme

In order to achieve the above objective, the embodiment of the present invention provides a battery module, which comprises a cell, a cell separator and UV glue, wherein the cell and the cell separator are fixed through the UV glue to form a separate small component, and a plurality of the small components are stacked along a thickness direction of the cells to form a cell body of the battery module.

Further, a shape of the cell separator comprises an I-shape, a hollow-square shape, a regular U-shape, an inverted U-shape, a two-vertical-strip shape, a two-horizontal-strip shape and a four-point shape.

Further, the cell separator is made of plastic capable of transmitting ultraviolet light.

Further, a body of the cell separator is provided with a first surface and a second surface, and the first surface of the body of the cell separator is provided with a UV glue coating area and a glue overflow groove.

Further, the UV glue coating area is arranged on the first surface according to the following manners or combinations of a four-corner manner, a loop manner, a two-horizontal-strip manner, a two-vertical-strip manner, a regular U-shape manner and an inverted U-shape manner.

Further, the glue overflow groove is configured to surround the UV glue coating area.

Further, the second surface of the body of the cell separator is provide with a reference plane boss.

Further, the UV glue coating area corresponds to the reference plane boss.

Further, a shape of the reference plane boss is a rectangle, a C-shape, a W-shape, an O-shape, a Y-shape, a circle or a triangle.

Further, edges of the cell separators in adjacent small components are not contacted with each other.

Further, the cell separators in adjacent small components are reserved with cell expansion areas on central positions of the cells.

Further, an adhesion thickness of the UV glue is adjustable.

### Beneficial effect

In the technical scheme of the battery module provided in the present invention, a manufacturing tolerance of the cell and the cell separator may be controlled and absorbed by controlling the adhesion thickness of the UV glue, thereby solving the problem of the large thickness tolerance of the cell and the cell separator; and the cell separators in adjacent small components are reserved with cell expansion spaces on the central positions of the cells, thereby reserving a space for expansion of the cell and ensuring the safety of the module. The second surface of the body of the cell separator is provide with the reference plane boss to realize rapid positioning during stacking of the small components, thereby improving the production efficiency and the manufacturing accuracy, and in addition, the edges of the cell separators in adjacent small components are not contacted with each other, so that the force is not transmitted, thereby preventing the cell separator from being deformed to affect the safety of the module.

### BRIEF DESCRIPTION OF THE DRAWINGS

FIG. 1 is an exploded view of a battery module according to a first embodiment.
FIG. 2 is a side view of a cell separator of the battery module according to the first embodiment.
FIG. 3 is a schematic diagram of a side of a first surface in a small component of the battery module according to the first embodiment.
FIG. 4 is a schematic diagram of a side of a second surface in the small component of the battery module according to the first embodiment.
FIG. 5 is an exploded view of a battery module according to a second embodiment.
FIG. 6 is a schematic diagram of a cell separator of the battery module according to the second embodiment.
FIG. 7 and FIG. 8 are schematic diagrams of the cell separator of the battery module according to a third embodiment.
FIG. 9 and FIG. 10 are schematic diagrams of the cell separator of the battery module according to a fourth embodiment.
FIG. 11 is a schematic diagram of the cell separator of the battery module according to a fifth embodiment.

In the drawings, 1 refers to wire harness, 2 refers to upper cover, 3 refers to connecting sheet, 4 refers to electrical separator, 5 refers to side plate, 6 refers to cell separator, 61 refers to side opening, 62 refers to UV glue coating area, 63 refers to glue overflow groove, 64 refers to reference plane boss, 65 refers to expansion area, 66 refers to first surface, 67 refers to second surface, 68 refers to first separator, 69 refers to second separator, 681 refers to cell separator of the first embodiment, 682 refers to cell separator of the second embodiment, 683 refers to cell separator of the third embodiment, 685 refers to cell separator of the fourth embodiment, 687 refers to cell separator of the fifth embodiment, 7 refers to UV glue, 8 refers to cell, 81 refers to cell pole, and 9 refers to end plate.

### DETAILED DESCRIPTION

Optimal embodiments of the present invention

The technical schemes in the embodiments of the present invention will be described clearly and completely hereinafter with reference to the accompanying drawings in the embodiments of the present invention. Apparently, the embodiments described are merely some but not all of the embodiments of the present invention. Based on the embodiments of the present invention, all other embodiments obtained by those of ordinary skills in the art without going through any creative work belong to the scope of protection of the present invention.

It should be understood that the terms used for indicating the orientation or position, such as "upper", "lower", "left", "right", and the like, are all descriptions made according to the orientation or position of the accompanying drawings for the convenience of those skilled in the art to understand the technical schemes, and do not limit that the present invention can only be designed according to the orientation or position.

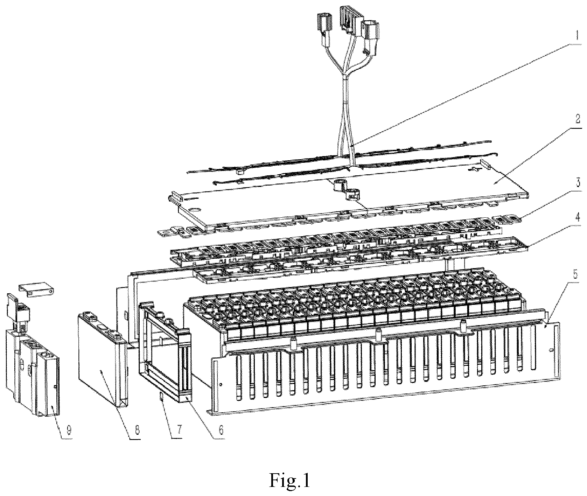

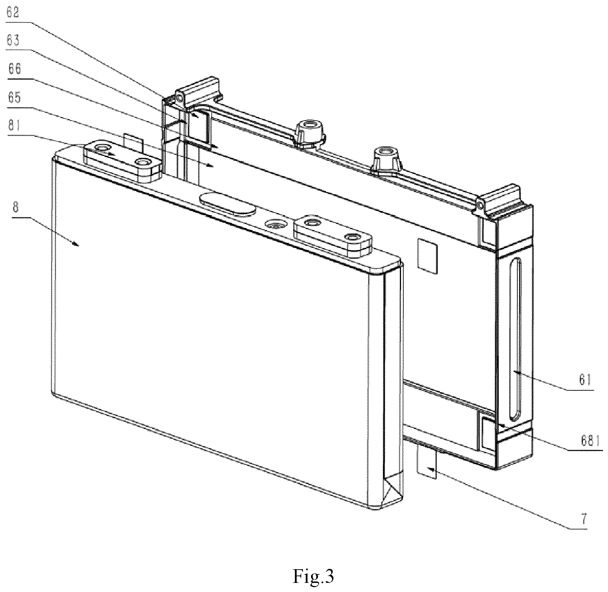

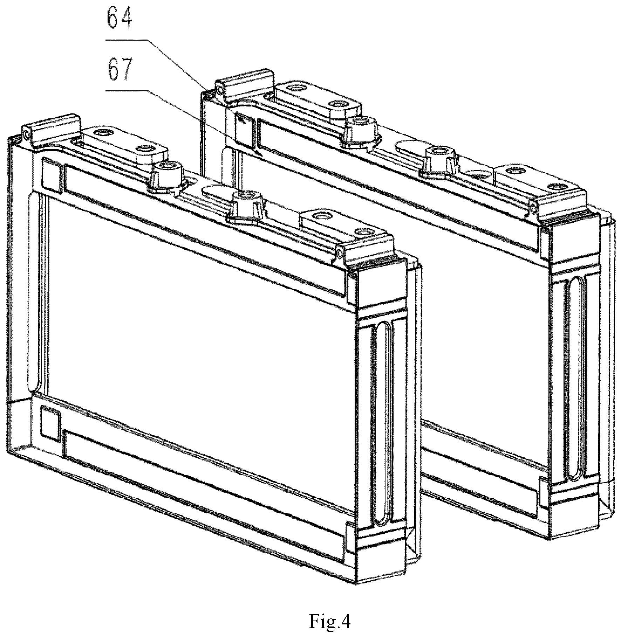

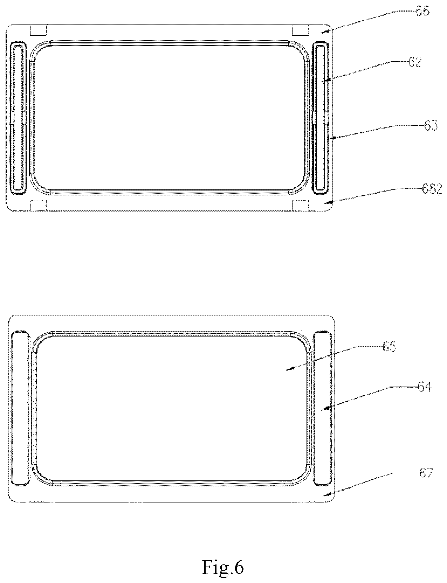

As shown in FIG. 1 to FIG. 11, the embodiment of the present invention provides a battery module, which comprises a cell (8), a cell separator (6) and UV glue (7), wherein the cell (8) and the cell separator (6) are fixed through the UV glue (7) to form a separate small component, and a plurality of the small components are stacked along a thickness direction of the cells to form a cell body of the battery module.

Further, a shape of the cell separator (6) comprises an I-shape, a hollow-square shape, a regular U-shape, an inverted U-shape, a two-vertical-strip shape, a two-horizontal-strip shape and a four-point shape.

Further, the cell separator (6) is made of plastic capable of transmitting ultraviolet light.

Further, a body of the cell separator (6) is provided with a first surface (66) and a second surface (67), and the first surface (66) of the body of the cell separator (6) is provided with a UV glue coating area (62) and a glue overflow groove (63).

Further, the UV glue coating area (63) is arranged on the first surface (66) according to the following manners or combinations of a four-corner manner, a loop manner, a two-horizontal-strip manner, a two-vertical-strip manner, a regular U-shape manner and an inverted U-shape manner.

Further, the glue overflow groove (63) surrounds the UV glue coating area (62).

Further, the second surface (67) of the body of the cell separator (6) is provide with a reference plane boss (64).

Further, the UV glue coating area (62) corresponds to the reference plane boss (64).

Further, a shape of the reference plane boss (64) is a rectangle, a C-shape, a W-shape, an O-shape, a Y-shape, a circle or a triangle.

Further, edges of the cell separators (6) in adjacent small components are not contacted with each other.

Further, the cell separators (6) in adjacent small components are reserved with cell expansion areas (65) on central positions of the cells.

Further, an adhesion thickness of the UV glue (7) is adjustable.

Several embodiments of the cell separator will be described in detail hereinafter.

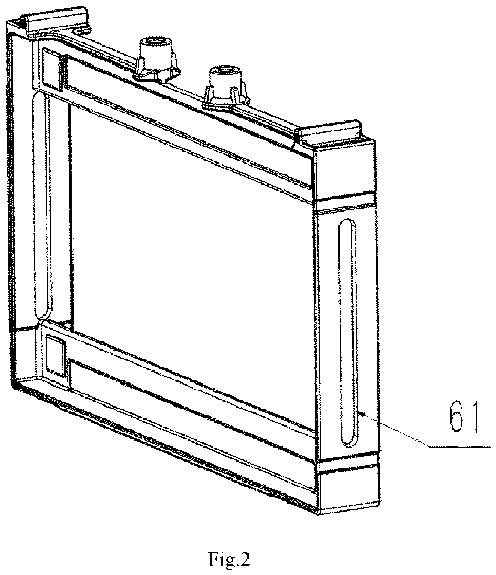

As the first embodiment of the present invention, as shown in FIG. 1, the battery module is composed of a cell separator (681) of the first embodiment, and as shown in FIG. 2 to FIG. 4, the cell separator (681) of the first embodiment is made of a PC material and is in a rectangle. An oval side opening (61) is arranged at a center of a side edge of the cell separator (6), the body of the cell separator (6) is completely hollowed out on a position corresponding to the side opening (61) to form the expansion area (65), and the side plate (5) of the battery module is provided with a vent on the position corresponding to the side opening (61) of the cell separator. When the battery module is completely assembled, cooling gas may pass through the battery module through the vent on the side plate (5) of the battery module and is directly contacted with the cell (7) to cool the cell (7).

The expansion area (65) traverses the cell separator (6), and a width of the expansion area is the same as a height of the side opening (61), thereby reserving a space for expansion of the cell (7). When the cell (7) is heated and expanded during operation, the cell (7) will be deformed along the thickness direction of the cells, and the expansion area (65) is able to reserve an enough space for the deformation, thereby reducing an effect of the deformation of the cell (7) on the whole battery module.

Four UV glue coating areas (63) and four glue overflow grooves (62) are respectively arranged on four vertex positions on one side of the cell separator (6), the UV glue coating areas (63) are in a rectangle, and the other side of the cell separator (6) is provided with the reference plane bosses (64) on positions corresponding to the UV glue coating areas (63). When the battery module is assembled, the glue overflow grooves (62) may accommodate redundant UV glue to prevent overflow of the UV glue from affecting new energy of the battery module, and the reference plane boss (64) may further extrude a contact portion between the cell (7) and the UV glue, thus improving an adhesion stability between the cell (7) and the cell separator (6).

Positioning devices (66) are respectively arranged at two ends of a top of the cell separator (6), which are able to provide positioning assistance for two adjacent cell separators (6) when the battery module is assembled. The top of the cell separator (6) is provided with an exhaust channel mounting and fixing site (67) on a position corresponding to an explosion-proof valve of the cell (7). After all the cells (7) and the cell separators (6) are assembled, an exhaust channel is assembled in the exhaust channel mounting and fixing site (67), and gas ejected from the explosion-proof valve of the cell (7) is collected to prevent an electrolyte from splashing around, thus further improving the safety of the whole battery module.

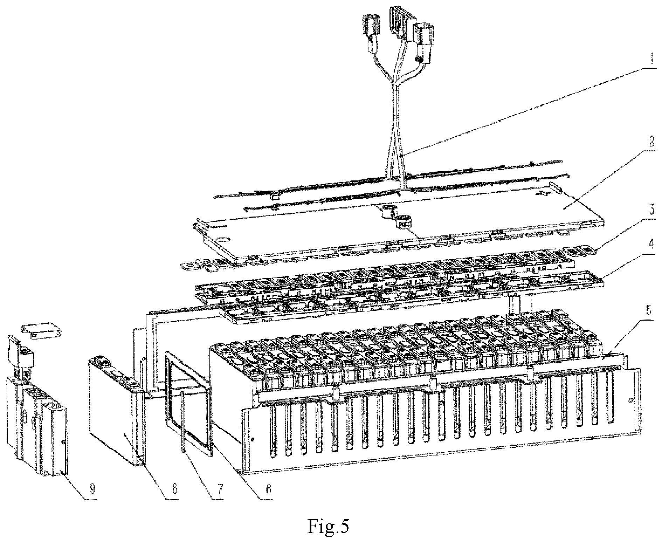

As another embodiment of the present invention, as shown in FIG. 5, the battery module is composed of a cell separator (682) of the second embodiment. In the embodiment, the cell separator (682) of the second embodiment may be replaced by a cell separator (683) of the third embodiment, a cell separator (685) of the fourth embodiment or a fifth cell separator (687) according to a condition, and the cell separator of each embodiment will be further described hereinafter.

As shown in FIG. 5, the cell separator (682) of the second embodiment has a rectangular frame structure as a whole, and a center of the cell separator (6) is the expansion area, thus reserving a space for expansion of the cell (7). When the cell (7) is heated and expanded during operation, the cell (7) will be deformed along the thickness direction of the cells, and the expansion area (65) is able to reserve an enough space for the deformation, thus reducing an effect of the deformation of the cell (7) on the whole battery module.

Two UV glue coating areas (63) and two glue overflow grooves (62) are respectively arranged on two wide edge positions of the cell separator (6), the UV glue coating areas (63) are in a rectangle, and the other side of the cell separator (6) is provided with the reference plane bosses (64) on positions corresponding to the UV glue coating areas (63). When the battery module is assembled, the glue overflow grooves (62) may accommodate redundant UV glue to prevent overflow of the UV glue from affecting new energy of the battery module, and the reference plane boss (64) may further extrude a contact portion between the cell (7) and the UV glue, thus improving an adhesion stability between the cell (7) and the cell separator (6).

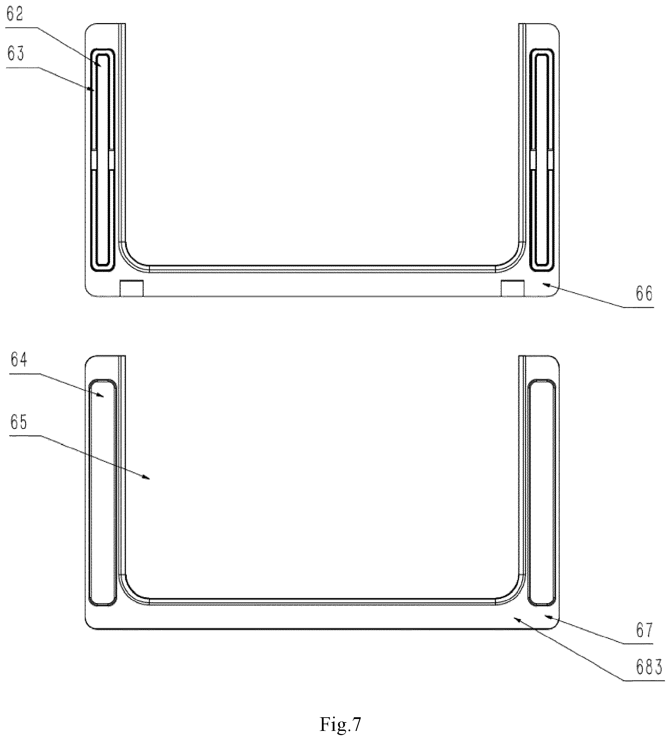

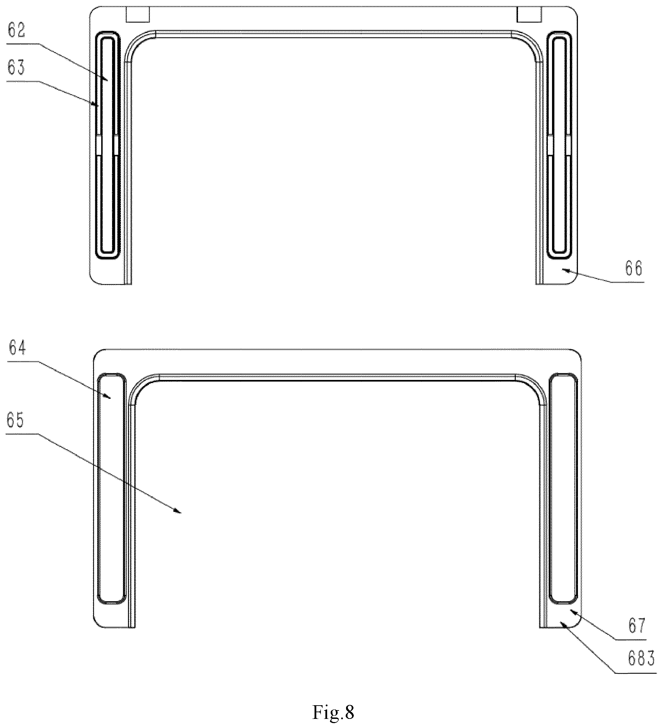

As shown in FIG. 7 and FIG. 8, the cell separator (683) of the third embodiment has a U-shaped frame structure as a whole, and an opening position of the cell separator (6) is the expansion area, thereby reserving a space for expansion of the cell (7). When the cell (7) is heated and expanded during operation, the cell (7) will be deformed along the thickness direction of the cells, and the expansion area (65) is able to reserve an enough space for the deformation, thereby reducing an effect of the deformation of the cell (7) on the whole battery module.

Two UV glue coating areas (63) and two glue overflow grooves (62) are respectively arranged on two side edge positions of the cell separator (6), the UV glue coating areas (63) are in a rectangle, and the other side of the cell separator (6) is provided with the reference plane bosses (64) on positions corresponding to the UV glue coating areas (63). When the battery module is assembled, the glue overflow grooves (62) may accommodate redundant UV glue to prevent overflow of the UV glue from affecting new energy of the battery module, and the reference plane boss (64) may further extrude a contact portion between the cell (7) and the UV glue, thereby improving an adhesion stability between the cell (7) and the cell separator (6).

It should be noted that the cell separator (6) shown in FIG. 7 is a U-shaped frame with an upward opening, and the cell separator (6) shown in FIG. 8 is a U-shaped frame with a downward opening. The two U-shaped frames have the same structure but different opening directions, and similarly, the U-shaped frame may also have a left or right opening.

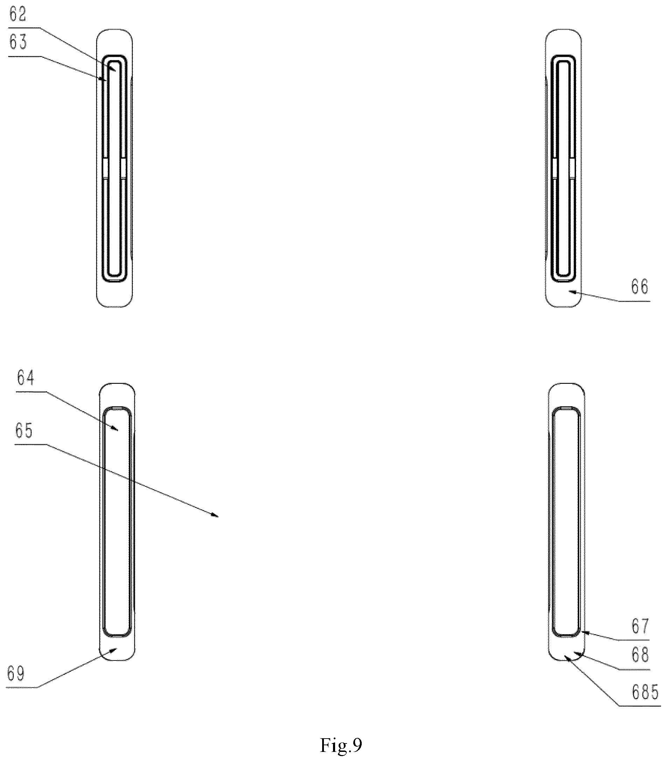

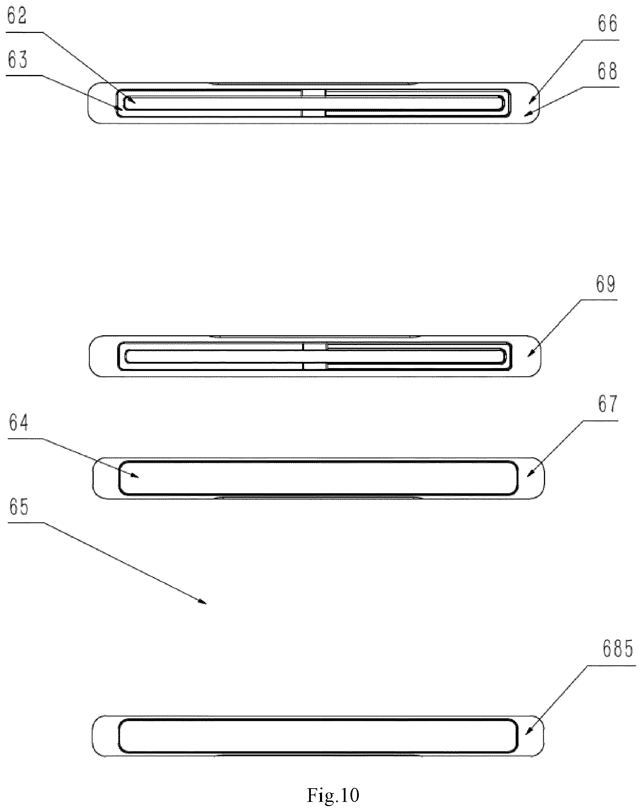

As shown in FIG. 9 and FIG. 10, the cell separator (685) of the fourth embodiment is composed of the first separator (68) and the second separator (69), and the expansion area is formed between the first separator (68) and the second separator (69), thus reserving a space for expansion of the cell (7). When the cell (7) is heated and expanded during operation, the cell (7) will be deformed along the thickness direction of the cells, and the expansion area (65) is able to reserve an enough space for the deformation, thus reducing an effect of the deformation of the cell (7) on the whole battery module.

A layout scheme is shown in FIG. 9, the first separator (68) and the second separator (69) have a same height and are respectively adhered to two side edges of the cell (7). Each separator is provided with one UV adhesive coating area (63) and one glue overflow groove (62). The UV glue coating area (63) is in a rectangle, and the other side of the cell separator (6) is provided with the reference plane boss (64) on a position corresponding to the UV glue coating area (63). When the battery module is assembled, the glue overflow groove (62) may accommodate redundant UV glue to prevent overflow of the UV glue from affecting new energy of the battery module, and the reference plane boss (64) may further extrude a contact portion between the cell (7) and the UV glue, thereby improving an adhesion stability between the cell (7) and the cell separator (6).

Another layout scheme is shown in FIG. 10, the first separator (68) and the second separator (69) have a same length and are respectively adhered to two long edges of the cell (7), and each separator is provided with one UV glue coating area (63) and one glue overflow groove (62). The UV glue coating area (63) is in a rectangle, and the other side of the cell separator (6) is provided with the reference plane boss (64) on a position corresponding to the UV glue coating area (63). When the battery module is assembled, the glue overflow groove (62) may accommodate redundant UV glue to prevent overflow of the UV glue from affecting new energy of the battery module, and the reference plane boss (64) may further extrude a contact portion between the cell (7) and the UV glue, thus improving an adhesion stability between the cell (7) and the cell separator (6).

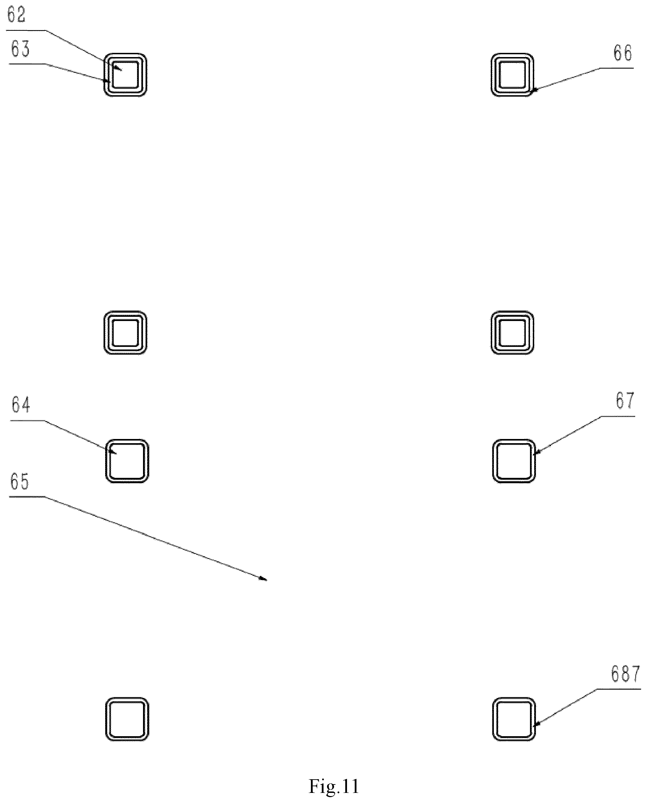

As shown in FIG. 11, the cell separator (687) of the fifth embodiment is composed of four small components, and the expansion area is formed among the four small components, thus reserving a space for expansion of the cell (7). When the cell (7) is heated and expanded during operation, the cell (7) will be deformed along the thickness direction of the cells, and the expansion area (65) is able to reserve an enough space for the deformation, thus reducing an effect of the deformation of the cell (7) on the whole battery module.

The small components (610) are respectively attached to four vertices of the cell, and each small component (610) is provided with one UV glue coating area (63) and one glue overflow groove (62). The UV glue coating area (63) is in a rectangle, and the other side of the cell separator (6) is provided with the reference plane boss (64) on a position corresponding to the UV glue coating area (63). When the battery module is assembled, the glue overflow groove (62) may accommodate redundant UV glue to prevent overflow of the UV glue from affecting new energy of the battery module, and the reference plane boss (64) may further extrude a contact portion between the cell (7) and the UV glue, thus improving an adhesion stability between the cell (7) and the cell separator (6).

Those described above are the preferred embodiments of the present invention, and it should be pointed out that those of ordinary skills in the art may further make improvements and decorations without departing from the principle of the present invention, and these improvements and decorations should also be regarded as the scope of protection of the present invention.

## Claims

1. A battery module, comprising a cell, a cell separator and UV glue, wherein the cell and the cell separator are fixed through the UV glue to form a separate small component, and a plurality of the small components are stacked along a thickness direction of the cells to form a cell body of the battery module.

2. The battery module according to claim 1, wherein a shape of the cell separator comprises an I-shape, a hollow-square shape, a regular U-shape, an inverted U-shape, a two-vertical-strip shape, a two-horizontal-strip shape and a four-point shape.

3. The battery module according to claim 2, wherein the cell separator is made of plastic capable of transmitting ultraviolet light.

4. The battery module according to claim 2, wherein a body of the cell separator is provided with a first surface and a second surface, and the first surface of the body of the cell separator is provided with a UV glue coating area and a glue overflow groove.

5. The battery module according to claim 4, wherein the UV glue coating area is arranged on the first surface according to the following manners or combinations of a four-corner manner, a loop manner, a two-horizontal-strip manner, a two-vertical-strip manner, a regular U-shape manner and an inverted U-shape manner.

6. The battery module according to claim 4, wherein the glue overflow groove is configured to surround the UV glue coating area.

7. The battery module according to claim 4, wherein the second surface of the body of the cell separator is provide with a reference plane boss.

8. The battery module according to claim 4 or 7, wherein the UV glue coating area is configured to correspond to the reference plane boss.

9. The battery module according to claim 4 or 7, wherein a shape of the reference plane boss is a rectangle, a C-shape, a W-shape, an O-shape, a Y-shape, a circle or a triangle.

10. The battery module according to claim 1, wherein edges of the cell separators in adjacent small components are not contacted with each other.

11. The battery module according to claim 1, wherein the cell separators in adjacent small components are reserved with cell expansion areas at central positions of the cells.

12. The battery module according to claim 1, wherein an adhesion thickness of the UV glue is adjustable.
